(19) Europäisches Patentamt
European Patent Office
Office européen des brevets

(11) **EP 2 985 377 B1**

(12) **EUROPEAN PATENT SPECIFICATION**

(45) Date of publication and mention
of the grant of the patent:
**01.01.2020 Bulletin 2020/01**

(51) Int Cl.:
***D04H 3/007*** *(2012.01)*   ***B01D 39/16*** *(2006.01)*
***D04H 3/153*** *(2012.01)*   ***D04H 3/16*** *(2006.01)*

(21) Application number: **14783202.6**

(22) Date of filing: **03.04.2014**

(86) International application number:
**PCT/JP2014/059800**

(87) International publication number:
**WO 2014/168066 (16.10.2014 Gazette 2014/42)**

(54) **MIXED-FIBER NONWOVEN FABRIC AND METHOD FOR MANUFACTURING SAME**

MISCHFASER-VLIESSTOFF UND VERFAHREN ZUR HERSTELLUNG DAVON

TISSU NON TISSÉ À FIBRE MÉLANGÉE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.04.2013 JP 2013082892**

(43) Date of publication of application:
**17.02.2016 Bulletin 2016/07**

(73) Proprietor: **Toray Industries, Inc.**
**Tokyo 103-8666 (JP)**

(72) Inventors:
• **KURODA, Akito**
**Otsu-shi**
**Shiga 520-8558 (JP)**
• **IYAMA, Yuji**
**Otsu-shi**
**Shiga 520-8558 (JP)**
• **YAKAKE, Yoshikazu**
**Otsu-shi**
**Shiga 520-8558 (JP)**

(74) Representative: **Mewburn Ellis LLP**
**City Tower**
**40 Basinghall Street**
**London EC2V 5DE (GB)**

(56) References cited:
JP-A- H0 782 649          JP-A- H02 112 460
JP-A- 2010 511 488      JP-A- 2013 177 703
JP-B2- 2 770 379          US-A1- 2004 016 345
US-A1- 2008 315 454

EP 2 985 377 B1

**Description**

Technical Field

The present invention relates to a mixed fiber nonwoven fabric containing two groups of fibers of different types of polymers that is suitably used mainly as air filter medium, and a production method therefor.

Background Art

As problems frequently occur in recent years due to atmospheric contamination and infectious disease, there are increasing demands for filter mediums for air cleaners, automobile cabin filters, etc., as a result of increasing needs for healthy living. The technique to remove airborne dust using air filters containing filter mediums such as nonwoven fabrics is adopted in common for producing these products. These air filter mediums are required to have high dust collection efficiency.

For providing nonwoven fabric filter mediums with high dust collection efficiency, there is a proposed technique designed to produce a nonwoven fabric formed of fibers with a very high fineness (see Patent Literature 1). However, this proposed technique has a problem in that the loss in pressure (hereinafter referred to as pressure loss) caused by the filter medium increases with an increasing filtration accuracy, leading to increased requirements of energy for air cleaning and filtration resulting from such an increased pressure loss.

For this problem, electrification of fibers has been widely known as a solution. Such electrification, also called electretizing treatment, brings about highly effective techniques particularly for enhancing the efficiency in collection of airborne fine particles (see Patent Literatures 2, 3, and 4). These techniques serve for dramatic improvement of dust collection efficiency. However, demands are increasing every year for filters with a decreased pressure loss and techniques to achieve further decrease in pressure loss has been sought after.

To achieve such a decrease in pressure loss, some techniques have been proposed which uses, as filter medium, a nonwoven fabric formed of a mixture of two or more types of charged fibers with different fiber diameters (see Patent Literatures 5, 6, and 7). In addition to the methods using charged fibers, proposed are methods using a combination of fibershaving different fiber diameters with the aim of improving the filter performance (see Patent Literatures 8 and 9). In the proposal made in Patent Literature 7, among others, a meltblown nonwoven fabric formed of a mixture of ultrafine fibers with a fiber diameter of 10 $\mu$m or less and larger size fibers with a fiber diameter of more than 10 $\mu$m has preferred sheet moldability and air permeability when used as a mask or filter.

In addition, there are other various known methods for producing mixed fiber meltblown nonwoven fabrics formed of a plurality of material components. As an example of fabrics for filters, there is a proposal of producing a high durability nonwoven fabric by mixing fibers with different melting points and melting part of the fibers (see Patent Literature 10).

Besides, although filters are not the main purpose, there are some proposals of applying a similar production method to producing a nonwoven fabric with improved stretching properties and texture by mixing in elastomeric fibers (see Patent Literatures 12, 13, and 14).

Prior Art Documents

Patent Documents

Patent Literature 1:JP 2002-201560A

Patent Literature 2 :JP 63-280408A

Patent Literature 3 :JP 09-501604A

Patent Literature 4:JP 2002-249978A

Patent Literature 5:JP 02-104765A

Patent Literature 6:JP 2010-511488A

Patent Literature 7:JP 2009-545682A

Patent Literature 8 U.S. Patent No. 5783011

Patent Literature 9:JP 11-131353A

Patent Literature 10:JP 07-082649A

Patent Literature 12:JP 2006-112025A

Patent Literature 13:JP 2005-171456A

Patent Literature 14:JP 06-093551A

US 2004/016345 A1 discloses a mixed fiber nonwoven fabric used as a filter comprising two fiber groups, namely, thermally bonded staple fibers and non-thermally bonded microfibers, the porous molded web being retained in its molded configuration, at least in part, by bonds between the staple fibers at points of fiber intersection.

Summary of the Invention

Problems to be Solved by the Invention

As described above, Patent Literature 7 insists that high filter performance can be achieved by mixing ultrafine fibers with a fiber diameter of 10 $\mu$m or less and fibers with a fiber diameter of more than 10 $\mu$m. However, a nonwoven fabric containing such thick fibers is required to have a relatively large mass per unit area in order to have an intended dust collection efficiency. Therefore, there will occur a problem of increased costs particularly for producing high accuracy filter mediums.

It has been suggested elsewhere that a nonwoven fabric having both a small mass per unit area and high dust collection efficiency can be produced by using a fiber mixture containing fine fibers with fiber diameters smaller than those disclosed in Patent Literature 7. It is often difficult, however, to produce ultrafine fibers that can serve to achieve both a small mass per unit area and a high dust collection efficiency. If a nonwoven fabric containing ultrafine fiber is to be produced by meltblowing, for example, there will be a problem of failing to obtain a high quality nonwoven fabric sheet because of scattering of spun ultrafine fibers in the form of fiber agglomerates, called fly, in the air.

In the proposals of meltblown nonwoven fabrics containing multiple component mixed fibers described in Patent Literatures 12, 13, and 14, no description is given to methods in which a mixed fiber nonwoven fabric sheet formed of fiber components varying in fineness and containing extremely thick fibers with fiber diameters of more than 10 $\mu$m can be produced while depressing the generation of fly.

Patent Literature 10 mentioned above describes a method to improve the strength of a filter by mixing in fibers with a low melting point and then heat-treating them so that the low melting point fibers will be melted to achieve adhesion. If this method is used, however, many fibers in the filter will suffer from fusion, leading to a decrease in specific surface area of the nonwoven fabric. As a result of this, there will occur a problem of a decrease in dust collection efficiency particularly when applied to charged filters.

If fibers containing different polymers that are low in electrification characteristics and charge retention are mixed in a meltblown nonwoven fabric for electret filters, furthermore, there will occur a problem of a decrease in electrification performance of the nonwoven fabric as a whole, making it impossible to achieve a high dust collection efficiency.

Accordingly, an object of the present invention is to provide a mixed fiber nonwoven fabric that is high in dust collection efficiency despite a small mass per unit area, effective in reducing the pressure loss, useful particularly as filter medium for air filters, and excellent in filter medium performance and sheet quality in good balance.

In addition, another object of the present invention is to provide a production method for a mixed fiber nonwoven fabric that is high in filter medium performance and productivity.

Means of Solving the Problems

As a result of intensive studies, the inventors have found that a mixed fiber nonwoven fabric that can solve the above problems can be obtained by selecting an appropriate material, fiber diameter, and proportion of particular fibers.

Specifically, the mixed fiber nonwoven fabric according to the present invention is a mixed fiber nonwoven fabric including at least two fiber groups, namely, one containing fibers of polyolefin based resin component A and the other containing fibers of polyolefin based resin component B, the fiber group containing fibers of polyolefin based resin component A being referred to as first fiber group, the first fiber group having a number average fiber diameter of 0.3$\mu$m

to 7.0 μm, part of the fibers of polyolefin based resin component B, each having a fiber diameter that is in the range of 15μm to 100 μm and not less than 5 times the number average fiber diameter of the first fiber group being referred to as second fiber group, the fibers of the second fiber group maintaining a form of fibers and existing in the cross section of the mixed fiber nonwoven fabric at a rate of 7.0 fibers or more per mm of the cross-sectional length, the melting point of polyolefin based resin component B being lower by 5°C to 40°C than that of polyolefin based resin component A, the melt flow rate of polyolefin based resin component A being 5 to 100 times the melt flow rate of polyolefin based resin component B, and the number average fiber diameter of the mixed fiber nonwoven fabric as a whole being 0.3μm to 10 μm.

According to a preferred embodiment of the mixed fiber nonwoven fabric of the present invention, the ratio of X/Y where X and Y are the number of the fibers in the first fiber group and the number of the fibers in the second fiber group, respectively, is in the range of 50 to 5,000.

According to a preferred embodiment of the mixed fiber nonwoven fabric of the present invention, the mixed fiber nonwoven fabric is a mixed fiber nonwoven fabric produced by mixed fiber meltblowing.

The mixed fiber meltblowing referred to here is a meltblowing technique as described in U.S. Patent No. 3,981,650 that uses a spinneret having a line of spinning holes designed for discharge of flows of a resin or different resins. The resin for the first fiber group and the resin for the second fiber group are melted, kneaded, and weighed by separate extruders and gear pumps and then discharged through separate spinning holes, followed by producing a nonwoven fabric while uniformly mixing the fibers of the first group and the fibers of the second group.

According to a preferred embodiment of the mixed fiber nonwoven fabric of the present invention, polyolefin component A specified above is a polypropylene homopolymer.

According to a preferred embodiment of the mixed fiber nonwoven fabric of the present invention, polyolefin component B is a propylene-ethylene copolymer.

According to a preferred embodiment of the mixed fiber nonwoven fabric of the present invention, the mixed fiber nonwoven fabric is subjected to electrification treatment.

According to a preferred embodiment of the mixed fiber nonwoven fabric of the present invention, the ratio of A:B where A and B are the volume of the fibers of polyolefin based resin component A and that of the fibers of polyolefin based resin component B, respectively, is in the range of 20:80 to 90:10.

The present invention can provide a laminated sheet including at least one layer of the mixed fiber nonwoven fabric and also provide a filter including the mixed fiber nonwoven fabric or the laminated sheet.

The production method for the mixed fiber nonwoven fabric according to the present invention is a mixed fiber nonwoven fabric production method in which two different components, namely, polyolefin based resin component A and polyolefin based resin component B, are discharged from separate discharge holes in a die, the melting point of the polyolefin based resin component A being higher by 5°C to 40°C than the melting point of the polyolefin based resin component B, the melt flow rate of the polyolefin based resin component A being 5 to 100 times the melt flow rate of polyolefin based resin component B, and the apparent spinning speed of the fibers of polyolefin based resin component A is 20 to 500 times the apparent spinning speed of the fibers of polyolefin based resin component B.

Advantageous Effect of the Invention

The present invention provides a mixed fiber nonwoven fabric that is high in dust collection efficiency, despite a small mass per unit area, and effective in reducing the pressure loss, and also provides a filter formed of such a mixed fiber nonwoven fabric and having such characteristics. High in dust collection efficiency, the mixed fiber nonwoven fabric according to the present invention serves to produce a filter having high performance in removing fine particles. Low in pressure loss, furthermore, the mixed fiber nonwoven fabric according to the present invention serves to produce a filtering apparatus that can operate on decreased smaller energy and can be manufactured with smaller filter medium production cost because such high performance can be realized despite a small mass per unit area.

As another advantageous effect of the present invention, a mixed fiber nonwoven fabric with a small mass per unit area, a high dust collection efficiency, and a reduced pressure loss can be produced in a single step. For example, filter mediums can be manufactured with an increased productivity and decreased production cost because of the unnecessity of more than one steps.

Brief Description of the Drawings

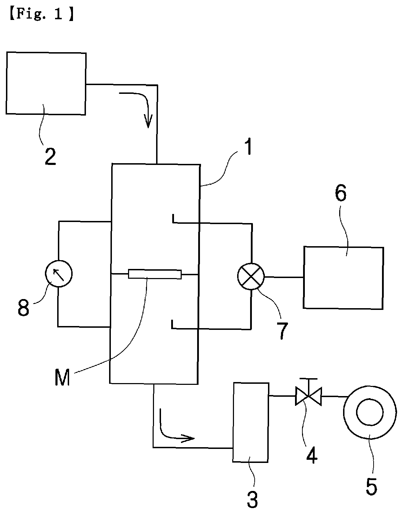

[Fig. 1] Fig. 1 gives a schematic side view of a dust collection efficiency measuring apparatus, which is intended for showing a schematic flow of measuring the dust collection efficiency and pressure loss in a mixed fiber nonwoven fabric.

Description of Preferred Embodiments

A preferred embodiment of the mixed fiber nonwoven fabric according to the present invention is described below.

The mixed fiber nonwoven fabric according to the present invention is a nonwoven fabric including at least two fiber-containing fiber groups, the first fiber group being composed mainly of fibers of polyolefin based resin component A and the second fiber group being composed mainly of fibers of polyolefin based resin component B.

As described above, the first fiber group and the second fiber group that are included in the mixed fiber nonwoven fabric according to the present invention each contain a polyolefin based resin component. Here, a polyolefin based resin is a thermoplastic resin formed mainly of a polymer compound produced by polymerizing an aliphatic unsaturated hydrocarbon compound as repeating unit. Polyolefin based resins are high in volume resistivity and low in hygroscopicity and accordingly can serve to produce fiber with good electrification characteristics and high charge retention. With this effect, the mixed fiber nonwoven fabric according to the present invention can ensure a high dust collection efficiency.

Various types of resins that can be used as polyolefin based resin component A include homopolymers of polyethylene, polypropylene, polybutene, and polymethylpentene. Also useful are copolymers produced by copolymerizing one of these homopolymers with another component and polymer blends of two or more thereof. Of these, polypropylene and polymethylpentene are preferred from the viewpoint of charge retention. Polypropylene is particularly preferred from the viewpoint of low cost availability.

Polyolefin based resin component A contained in the first fiber group used for the present invention is preferably a component with a large melt flow rate (MFR) to facilitate spinning of ultrafine fibers. The value of MFR under the conditions of a temperature of 230°C and a load of 21.18 N is, for example, preferably 200 g/10 min or more, more preferably 500 g/10 min or more. The use of material with a MFR larger than this facilitates the production of ultrafine fibers, making it possible to provide fibers with a fiber diameter in the intended range. Furthermore, the upper limit of the MFR is preferably 2,000 g/10 min. If the MFR is larger than this, the melt viscosity during spinning will be too low, leading to spinnability-related problems such as frequent formation of defective polymer agglomerates called shot.

The MFR of material generally depends on the polymeric molecular weight. The MFR decreases with an increasing molecular weight while the MFR increases with a decreasing molecular weight. To produce material with an intended MFR, polymers with small molecular weights may be polymerized directly or polymers with large molecular weights may be polymerized first followed by reaction with a degradation agent in a subsequent step to reduce the molecular weight into an intended range. Another technique is to add an unreacted degradation agent to high-molecular weight polymer chips and cause its reaction during melt spinning to reduce the molecular weight.

The fibers of the second group that are included in the mixed fiber nonwoven fabric according to the present invention are composed mainly of polyolefin based resin component B that has a melting point lower by 5 to 40°C than that of polyolefin based resin component A. The difference in melting point between polyolefin based resin component A and polyolefin based resin component B is preferably 10°C to 35°C, more preferably 15°C to 30°C.

For the mixed fiber nonwoven fabric according to the present invention, the mixing of two types of fibers, namely, fibers formed mainly of polyolefin based resin component A and fibers formed mainly of polyolefin based resin component B, having a difference in melting point as described above makes it possible to achieve a high dust collection efficiency. The mechanism of this, though not clarified yet, can be inferred as follows.

Specifically, when the meltblowing technique is used to produce the mixed fiber nonwoven fabric according to the present invention, the fibers of the first group that are relatively low in monofilament fineness, high in melting point, and high in solidification speed are entangled with the fibers of the second group that are relatively large in monofilament diameter, low in melting point, and in a semi-molten state, as they form a sheet, thus preventing the generation of fly and resulting in a mixed fiber nonwoven fabric containing a large amount of fibers with low monofilament fineness and having high dust collection efficiency.

Fly is likely to be generated heavily under spinning conditions where thin fibers account for a large part because, when discharged from the spinneret, thinner fibers have smaller quantities of heat and can solidify faster, leading to decreased fiber fusion. Such spinning conditions can be realized by, for example, increasing the spinning temperature, decreasing the discharge rate, or increasing the pressure used for supplying high-temperature compressed air.

If fly is generated in large amounts, the surfaces of nonwoven fabrics will catch bundle-like fiber ropes (dust fiber bundles) and such nonwoven fabrics with large amounts of dust fiber bundles caught on the surfaces are not preferred from the viewpoint of surface appearance. In particular, although the surface of the nonwoven fabric that faces the dust collection conveyor is likely to undergo relatively fast fiber fusion and will not suffer from significant generation of dust fiber bundles, the opposite surface of the nonwoven fabric (the surface not in direct contact with the dust collection conveyor) undergoes relatively slow fiber fusion and easy removal of fibers due to the influence of high temperature compressed air used to supply fibers, thus facilitating the generation of dust fiber bundles.

For the mixed fiber nonwoven fabric according to the present invention, the number of dust fiber bundles in an area of 10 cm × 10 cm is preferably 5 or less, more preferably 2 or less. Here, the term "dust fiber bundles" refers to bundles of fibers with a length of 1 cm or more that can be removed easily by hand from the surface of the nonwoven fabric. It must be easy for a person skilled in the art to determine the existence or absence of dust fiber bundles.

If the difference in melting point between polyolefin based resin component A and polyolefin based resin component B is smaller than 5°C, the entangling effect is not realized and therefore, a mixed fiber nonwoven fabric containing large amounts of thin fibers cannot be obtained, leading to a decrease in dust collection efficiency. If the difference in melting point is larger than 40°C, on the other hand, excessively strong fiber fusion will occur and the fabric will be in a film-like state, leading to a decrease in dust collection efficiency and an increase in pressure loss. Furthermore, if the melting points of polyolefin based resin component A and B are too low, the overall heat resistance of the mixed fiber nonwoven fabric will decrease, leading to problems in practical uses. Polyolefin based resin component A and B each preferably have a melting point of 100°C or more, more preferably 120°C or more, and still more preferably 130°C or more.

There are no specific limitations on the melting points of polyolefin based resin component A and B, but they are preferably 230°C or less, more preferably 200°C or less, and still more preferably 180°C or less. If resin components having melting points higher than these ranges are used, a large amount of energy may be required for melting, possibly leading to an economic disadvantage.

Useful examples of polyolefin based resin component B used for the present invention include homopolymers of polyethylene, polypropylene, polybutene, and polymethylpentene, and copolymers produced by copolymerizing one of these homopolymers with another component. In particular, it is preferable to use a copolymer produced by copolymerizing two or more types of different olefin components. In regard to such copolymers, those which differ largely in melting point can be produced by controlling the compounding ratio and arrangement of the copolymerization components. As a result, it will become easier to realize a small pressure loss and a high dust collection efficiency as intended by the present invention.

From the viewpoint of easily realizing a desired melting point, the use of a polypropylene based copolymer is preferable among others, more preferably a propylene-ethylene copolymer produced by copolymerizing a propylene component and an ethylene component. The copolymer may also contain other olefin based components or non-olefin components unless they impair the advantageous effects of the present invention. With respect to the type of copolymerization, it may be a random copolymer, a block copolymer, or the like, of which a random copolymer is preferable.

Furthermore, polyolefin based resin component B used for the present invention is preferably a non-elastomeric component. If an elastomer is applied to the mixed fiber nonwoven fabric according to the present invention, the resulting mixed fiber nonwoven fabric as a whole will be high in stretchability. A highly stretchable mixed fiber nonwoven fabric may decrease in bulkiness when stretched by a process tension and may also cause an increased pressure loss.

For the present invention, the polymer to be used as polyolefin based resin component B should not necessarily be high in charge retention. If an electrification treatment step is included, the use of a hydrophobic polymer is preferable from the viewpoint of improving the dust collection efficiency during electrification treatment.

If, in particular, the fibers of the first group and the fibers of the second group are spun together from a single spinneret for producing the mixed fiber nonwoven fabric according to the present invention, the resin of polyolefin based resin component B preferably has a melt viscosity higher than that of polyolefin based resin component A at the spinneret temperature. Specifically, the melt flow rate (MFR) under the conditions of a temperature of 230°C and a load of 21.18 N is preferably less than 200 g/10 min, more preferably less than 100 g/10 min. If a resin with a high viscosity is used as polystyrene based resin component B, it will be easy to realize a state in which very thick fibers of the second group with a monofilament diameter of 15 $\mu$m to 100 $\mu$m are mixed in a mixed fiber nonwoven fabric formed mainly of ultrafine fibers with a number average fiber diameter of 0.3 $\mu$m to 7.0 $\mu$m.

With respect to the lower limit, the MFR of polyolefin based resin component B is preferably 3 g/10 min or more, more preferably 5 g/10 min or more, and still more preferably 10 g/10 min or more. If the MFR of polyolefin based resin component B is smaller than this, the back pressure of the spinneret may become too high during spinning, possibly leading to problems such as leakage of the polymer and deformation of the spinneret.

Polyolefin based resin component A contained in the mixed fiber nonwoven fabric according to the present invention has a melt flow rate that is 5 to 100 times as high, preferably 10 to 50 times as high, as the melt flow rate of polyolefin based resin component B.

Here, the melt flow rate is measured under the conditions of a temperature of 230°C and a load of 21.18 N, as described above. The use of materials largely differing in melt flow rate as described above makes it possible to simultaneously obtain two fiber groups largely differing in monofilament diameter to form the mixed fiber nonwoven fabric according to the present invention.

It may be effective to add an additive to either or both of polyolefin based resin component A and polyolefin based resin component B that form the mixed fiber nonwoven fabric according to the present invention, with the aim of enhancing and improving the electrification characteristics, weather resistance, heat stability, mechanical characteristics, coloring characteristics, surface characteristics, and other characteristics. In particular, if electrification treatment is to be performed for the mixed fiber nonwoven fabric, it is preferable to add an electretizing additive with the aim of enhancing the electrification characteristics.

In particular, at least one selected from the group consisting of hindered amine based compounds and triazine based compounds is preferably used as electretizing additive.

Examples of the hindered amine based compounds include poly[(6-(1,1,3,3-tetramethylbutyl) imino-1,3,5-triazine-2,4-diyl) ((2,2,6,6-tetramethyl-4-piperidyl)imino) hexamethylene((2,2,6,6-tetramethyl-4-piperidyl) imino)] (Chimassorb (registered trademark) 944LD, manufactured by BASF Japan Ltd.), dimethyl succinate-1-(2-hydroxyethyl)-4-hydroxy-2,2,6,6-tetramethyl piperidine condensation polymers (Tinuvin (registered trademark) 622LD, manufactured by BASF Japan Ltd.), and bis(1,2,2,6,6-pentamethyl-4-piperidyl) 2-(3,5-di-t-butyl-4-hydroxybenzyl)-2-n-butyl malonate (Tinuvin (registered trademark) 144, manufactured by BASF Japan Ltd.).

Examples of the triazine based compounds include the aforementioned poly[(6-(1,1,3,3-tetramethylbutyl)imino-1,3,5-triazine-2,4-diyl) ((2,2,6,6-tetramethyl-4-piperidyl)imino) hexamethylene ((2,2,6,6-tetramethyl-4-piperidyl)imino)] (Chimassorb (registered trademark) 944LD, manufactured by BASF Japan Ltd.), and 2-(4,6-diphenyl-1,3,5-triazine-2-yl)-5-((hexyl)oxy)-phenol (Tinuvin (registered trademark) 1577FF, manufactured by BASF Japan Ltd.).

Of these electretizing additives, hindered amine based compounds are particularly preferred.

The content of such hindered amine based compounds and/or triazine based compounds is preferably in the range of 0.1 to 5.0 mass%, more preferably 0.5 to 3 mass%, and still more preferably 0.8 to 2.0 mass%, of the total mass of the mixed fiber nonwoven fabric. If such a hindered amine based compound or triazine based compound is attached over the surface of the nonwoven fabric or fibers, it is preferable for them to account for 0.1 to 5.0 mass% of the total mass of the nonwoven fabric.

Furthermore, in addition to the compounds listed above, the mixed fiber nonwoven fabric according to the present invention may also contain additives widely used for electretized products, such as thermal stabilizer, weathering agent, and polymerization inhibitor.

For the mixed fiber nonwoven fabric of the present invention, the volume ratio of A:B between the fibers of polyolefin based resin component A and the fibers of polyolefin based resin component B is preferably in the range of 20:80 to 90:10. The volume ratio of A:B is more preferably 30:70 to 80:20 and still more preferably 40:60 to 70:30.

If the content (vol%) of the fibers of polyolefin based resin component A in the first fiber group used for the present invention is less than 20% by volume, the fiber surface area in the mixed fiber nonwoven fabric may be too small, possibly making it impossible to achieve an intended high dust collection efficiency. If the content (vol%) of the fibers of polyolefin based resin component B that constitutes at least part of the second fiber group used for the present invention is less than 10% by volume, the existence of the fibers of polyolefin based resin component B will not serve sufficiently for improving the dust collection efficiency, possibly making it impossible to achieve an intended high dust collection efficiency. In addition, the mixed fiber nonwoven fabric according to the present invention may also contain components other than polyolefin based resin components A and B unless they impair the effects of the present invention. For example, fibers of component C that has a melting point still higher than that of component A may be contained with the aim of imparting rigidity and strength to allow the mixed fiber nonwoven fabric to be pleated.

Described below are production methods for the mixed fiber nonwoven fabric according to the present invention.

Useful production techniques for the mixed fiber nonwoven fabric according to the present invention include, for example, meltblowing, spunbonding, electrospinning, and entangling or mixing, and subsequent bonding if required, of different types of short fibers or long fibers separately prepared. Furthermore, the fibers of the first group and those of the second group may not necessarily be produced by similar production procedures. Two or more methods may be combined as follows. For example, the fibers of the first group are spun by electrospinning while the fibers of the second group are spun by meltblowing, or the fibers of the first group are spun by meltblowing while the fibers of the second group are spun by spunbonding. Or the fibers of the first group are spun by meltblowing while short fibers of the second group prepared separately may be blown in to ensure their mixing.

Of these methods, the meltblowing technique is preferred because it does not require complicated steps and can serve to simultaneously spin different types of fibers varying 5 times or more in fiber diameter. Major items of spinning conditions for a meltblowing process include polymer discharge rate, nozzle temperature, air compression pressure, and compressed air temperature, and the optimization of the spinning conditions makes it possible to produce a mixed fiber nonwoven fabric having intended monofilament diameters and intended proportions by number of fibers.

Specifically, a mixed fiber nonwoven fabric having intended fiber diameters and intended proportions by number of fibers can be obtained by combining the following features: (1) Substances with low melt viscosities are used as material for fibers of the first group while substances with high melt viscosities are used as material for fibers of the second group, (2) The single hole discharge rate is set to a low value for the polymer to produce the fibers of the first group while the single hole discharge rate is set to a high value for the polymer to produce the fibers of the second group, and (3) A larger number of discharge holes are used for the fibers of the first group than the number of discharge holes for the fibers of the second group.

With respect to the equipment to be used to produce the mixed fiber nonwoven fabric according to the present invention, a spinneret for mixed fiber meltblowing as disclosed in U.S. Patent No. 3,981,650 may be used if the meltblowing technique is adopted. In this case, the fiber web obtained will contain two types of fibers mixed more uniformly.

Another useful method is to spin the fibers of the first group and those of the second group through separate spinnerets and then mix them, as described, for example, in JP-8-13309. Still another useful method is to produce a stack of a nonwoven fabric formed of fibers of the first group and a nonwoven fabric formed of fibers of the second group, followed by entangling treatment such as needle punching. Because a nonwoven fabric formed of two types of fibers mixed more uniformly can be produced in a single step, it is preferable to adopt a mixed fiber meltblowing apparatus equipped with a spinneret provided with spinning holes aligned in a straight line so that different types of resins are discharged from one spinneret.

Of these spinning methods using the meltblowing technique, those based on mixed fiber meltblowing are particularly preferable because thin fibers and thick fibers can be spun simultaneously, which serves for depressing the fly generation due to self-fusion of fibers and enhancement of the sheet strength.

When the mixed fiber nonwoven fabric according to the present invention is produced by mixed fiber meltblowing, the ratio of the number of spinneret holes to discharge fibers of the first group to that of spinneret holes to discharge fibers of the second group is preferably 1:15 to 15:1, more preferably 1:1 to 11:1, and still more preferably 2:1 to 7:1. If the number of discharge holes for fibers of the first group is small, it will be difficult to achieve a preferred ratio in the number of fibers. If the number of discharge holes for the second fiber group is too small compared to the number of discharge holes for the first fiber group, on the other hand, it will be difficult to allow the fibers of the first group to be dispersed uniformly over the plane of the mixed fiber nonwoven fabric. If the discharge holes for the first fiber group and the discharge holes for the second fiber group are aligned in a line, the discharge holes for the two groups may be located alternatingly or in other desired orders. For example, the discharge holes for the two groups, referred to as a and b, may also be arranged, for example, as follows: abba, aabbbaa, or aaaabbbaaaa. From the viewpoint of obtaining a uniform nonwoven fabric, it is preferable for the discharge holes for the two groups to be located alternatingly. If required, furthermore, discharge holes for a third fiber may be provided in addition to those for the first fiber group and second fiber group.

If the mixed fiber nonwoven fabric according to the present invention is spun by mixed fiber meltblowing, the apparent spinning speed of the fibers of polyolefin based resin component A is preferably 20 to 500 times as high as that of the apparent spinning speed of the fibers of polyolefin based resin component B. The apparent spinning speed of the fibers of polyolefin based resin component A is more preferably 25 to 200 times, still more preferably 30 to 100 times, as high.

If fibers largely differing in spinning speed are discharged simultaneously from one spinneret, a mixed fiber nonwoven fabric having intended fiber diameters and proportions by number of fibers can be produced in a single step. If the ratio in apparent spinning speed is smaller, the ratio in the number of discharge holes for two polymers may have to be increased to achieve intended fiber diameters and proportions by number of fibers, possibly making it difficult to allow the two types of fibers to be dispersed uniformly in the mixed fiber nonwoven fabric.

The aforementioned apparent spinning speed is calculated by the following equation.

[Formula 1]

$$[\text{apparent spinning speed (m/min)}]$$

$$= \frac{4\,[\text{single hole discharge rate of polymer (kg/min·hole)}]}{\pi\,[\text{number average fiber diameter (m)}]^2\,[\text{solid density of polymer (kg/m}^3)]}$$

Here, the apparent spinning speed can be calculated by the calculation method generally used for determining the spinning speed of melting spinning, but in the case of fibers produced by meltblowing, it does not always agree with the actual spinning speed. This is because in a meltblowing step, the discharged polymer in a molten state is stretched by an inertial force.

For two types of fibers discharged from the same die, an increase in the difference in apparent spinning speed can be achieved by increasing the difference in melt viscosity between the resin materials used. For the mixed fiber nonwoven fabric according to the present invention, it is preferable, as described previously, to use a low viscosity material as polyolefin based resin component A while using a high viscosity material as polyolefin based resin component B.

If the mixed fiber nonwoven fabric according to the present invention is spun by mixed fiber meltblowing, the diameter $d_a$ (mm) of the discharge holes a's of polyolefin based resin component A is preferably 0.10 to 0.40 mm, more preferably 0.15 to 0.30 mm. When a low viscosity material is used as polyolefin based resin component A to spin fiber with an intended fiber diameter, the back pressure may be low to cause unstable discharge if the diameter $d_a$ is larger than the above range. If the diameter $d_a$ is smaller than the above range, on the other hand, problems such as blocking of holes by foreign objects may occur, possibly leading to unstable discharge.

The diameter $d_b$ of the discharge holes b's for polyolefin based resin component B is preferably in the range of 0.40 mm to 1.2 mm, more preferably in the range of 0.50 mm to 1.0 mm.

When a high viscosity material is used as polyolefin based resin component B to spin fiber with an intended fiber diameter, the back pressure may be excessively high, possibly leading to problems such as leakage of the polymer and deformation of the spinneret, if the diameter $d_a$ is smaller than the above range. The back pressure may be low to cause unstable discharge if the diameter $d_b$ is larger than the above range. In addition, it is preferable to use a spinneret for which the value of X, which is defined by the following equation where la and lb represent the depth (mm) of the holes a's and the depth (mm) of the holes b's, respectively, is 5.0 or more.

[Formula 2]

$$X = \frac{l_a d_a^{-4}}{l_b d_b^{-4}}$$

Here, the value of X corresponds to the pressure loss ratio in the discharge hole channels that occurs when the same polymer is fed to both holes at the same feed rate and discharged at the same discharge rate.

When the mixed fiber nonwoven fabric according to the present invention is spun, it is necessary to simultaneously spin a fiber with a small fiber diameter and a fiber with a large fiber diameter from a low viscosity material and a high viscosity material, respectively. The spinning of the former fiber tends to suffer from such problems as unstable spinning due to insufficient back pressure while the spinning of the latter fiber tends to suffer from such problems as deformation of the spinneret and leakage of the polymer due to excessive back pressure. To allow these fibers having such largely different characteristics to be spun simultaneously, it is preferable for the spinneret to be designed to have a large value of X. The value of X is more preferably 10 or more, still more preferably 20 or more.

If the mixed fiber nonwoven fabric according to the present invention is produced by the meltblowing technique, the collection distance (distance between the spinneret discharge holes and the collector, DCD) is preferably in the range of 5 cm to 40 cm, more preferably 10 cm to 30 cm.

As the collection distance increases, the spun fibers will be entangled to a higher degree, leading to a decrease in the effective area of the fiber surface to work as filter. In addition, the planar weight distribution in the mixed fiber nonwoven fabric will deteriorate and accordingly, the fabric will fail to work effectively as filter medium.

If the collection distance is too small, on the other hand, the solidification of the fiber will not proceed sufficiently in the sheet production process and accordingly, significant fiber fusion will occur, possibly leading to a decrease in the fiber surface area and an increase in the pressure loss.

With respect to the structural feature, the collector may be, for example, of a drum type, conveyor type, combined drum and conveyor type as disclosed in JP 2011-168903, or tube-like filter type as disclosed, for example, in U.S. Patent No. 5,783,011.

The mixed fiber nonwoven fabric according to the present invention is produced by mixing at least two types of fibers that differ in fiber distribution, thereby achieving a high filter performance. The mechanism of this, though not clarified yet, can be inferred as follows.

Of the two types of fibers, the fibers of the first group are small in fiber diameter and play a role in improving the dust collection efficiency in the mixed fiber nonwoven fabric according to the present invention. The fibers of the second group are large in fiber diameter and mainly play a role in reducing the pressure loss in the mixed fiber nonwoven fabric according to the present invention.

Specifically, the fibers of the first group, which are small in diameter, have a large specific surface area and accordingly, can collect particles efficiently on the fiber surface. The fibers of the second group, which are large in fiber diameter, mixed in the network of the fibers of the first group act to form large pores among the fibers of the first group. The existence of these interfiber pores serves to increase the air permeability of the nonwoven fabric and reduces the pressure loss. To enhance this effect efficiently, it is more preferable for the two types of fibers to be mixed uniformly in the thickness direction of the nonwoven fabric.

For the present invention, the number average fiber diameter can be determined by photographing the surface or cross section of the mixed fiber nonwoven fabric under a microscope, measuring the diameter of fibers existing in the image, and calculating the average.

It is important for the mixed fiber nonwoven fabric according to the present invention to contain a group of fibers of polyolefin based resin component A, which are referred to as of the first fiber group. The fibers of the first group has a number average fiber diameter in the range of 0.3 $\mu$m to 7.0 $\mu$m, preferably 0.5 $\mu$m to 4.0 $\mu$m, and more preferably 1.0 $\mu$m to 2.0 $\mu$m. If the number average fiber diameter is large, the specific surface area of the fibers will be small, possibly making it impossible to achieve required particle collection ability. It is more preferable for the fibers of the first group to be electrified with the aim of improving the dust collection efficiency.

It is important for the mixed fiber nonwoven fabric according to the present invention to contain a group of fibers of polyolefin based resin component B, which are referred to as the second fiber group, that have a fiber diameter of

15μm to 100 μm and a number average fiber diameter 5 times or more as large as that of the fibers of the first group. This is because having clearly different fiber diameter distributions, the two types of fibers, namely, those of the first fiber group and those of the second fiber group, can perform their respective functions to ensure both the improvement of the dust collection efficiency and the reduction of the pressure loss. It is preferable for the fibers of the second group to have a fiber diameter of 20μm to 100 μm. Furthermore, it is more preferable for the ratio of the fiber diameter of the fibers of the second group to the number average fiber diameter of the fibers of the first group to be 10 or more. With respect to the upper limit, the ratio of the fiber diameter of the fibers of the second group to the number average fiber diameter of the fibers of the first group is preferably 150 or less, more preferably 100 or less, and still more preferably 30 or less. If the fibers of polyolefin based resin component B of the first group have a fiber diameter smaller than this range, they will be less effective in supporting the interfiber pores. If the fibers of polyolefin based resin component B have a fiber diameter larger than this range, large quantities of resin materials will be required for the production of a nonwoven fabric, leading to an economic disadvantage. However, the mixed fiber nonwoven fabric according to the present invention may contain, for example, fibers of polyolefin based resin component B having a diameter outside the fiber diameter range specified for the second fiber group unless they impair the advantageous effects of the present invention.

The mixed fiber nonwoven fabric according to the present invention contains fibers of the second fiber group at a rate of 7.0 fibers or more per millimeter of cross-sectional length in the cross section of the nonwoven fabric. This number is preferably 10 fibers or more, more preferably 15 fibers or more.

Here, the number of fibers of fiber per millimeter of cross-sectional length in the mixed fiber nonwoven fabric is determined by microscopically observing two cross sections of the mixed fiber nonwoven fabric that are perpendicular to the surface of the nonwoven fabric and perpendicular to each other, identifying fibers having a cross section in each cross section, measuring their number per cross-sectional length of the nonwoven fabric, and averaging the measurements taken for each cross section. If the number of fibers of the second fiber group found in the mixed fiber nonwoven fabric is less than the aforementioned range, they will be less effective or ineffective in supporting the interfiber pores. With respect to the upper limit, the number of fibers of the second fiber group per millimeter of the cross-sectional length is preferably 500 or less, more preferably 200 or less. If the number of fibers of the second fiber group per millimeter of the cross-sectional length is larger than this, the nonwoven fabric as a whole will have a large mass per unit area, possibly leading to a disadvantage in terms of cost.

Methods for determining and evaluating the number of fibers of fiber per millimeter of cross-sectional length in a mixed fiber nonwoven fabric are described in paragraphs for Examples.

In the mixed fiber nonwoven fabric according to the present invention, it is important for the fiber of the second group to maintain a state of fibers. Here, the expression "maintain a form of fibers" means that the fibers are not fused by heat treatment or the like performed after the fabric production process. For example, JP-7-82649 discloses a method for improving the strength of a nonwoven fabric by melting fibers with a low melting point through heat treatment at a temperature above the melting point and then using them as binder fiber. However, if fibers with a low melting point are melted as described above, not only the number of interfiber pores will decrease and a larger pressure loss will occur, but also the fiber surface area will decrease to reduce the dust collection efficiency. The mixed fiber nonwoven fabric according to the present invention can serve to realize a small pressure loss and a high dust collection as a result of the fibers of the second group, which are low in melting point, maintaining a state of fiber.

For the mixed fiber nonwoven fabric according to the present invention, the fibers constituting the nonwoven fabric have a number average fiber diameter in the range of 0.3 μm to 10 μm, more preferably, 0.5 μm to 7.0 μm, and still more preferably 1.0 μm to 3.0 μm. For the mixed fiber nonwoven fabric according to the present invention, the number of fibers of the first group, which are smaller in number average fiber diameter, is overwhelmingly larger than the number of fibers of the second group, which have a fiber diameter of more than 15 μm. Accordingly, the overall number average fiber diameter of the nonwoven fabric is small. A mixed fiber nonwoven fabric that has both a small pressure loss and a high dust collection efficiency can be obtained by designing the fiber diameter and the number of fibers of the first group and the fibers of the second group so that the overall number average fiber diameter of the fibers constituting the nonwoven fabric comes in the aforementioned range. If the overall number average fiber diameter of the fibers constituting the nonwoven fabric is larger than this, the specific surface area of the fibers will be small, and if in particular, the mixed fiber nonwoven fabric is small in mass per unit area, it will fail to have a sufficiently high dust collection efficiency. On the other hand, the pressure loss will increase if the number average fiber diameter is smaller than this range.

The fibers of the second group are formed of polyolefin based resin component B. The existence of polyolefin based resin component B, which is low in melting point, in the fibers of the second group allows the fibers of the first group to be contained efficiently in a sheet, leading to a high dust collection efficiency. If part of the fibers of the second group contain polyolefin based resin component B, they may contain other additional components unless they impair the advantageous effect of the invention. For example, the fibers of the second group may have a composite structure in which the core contains polyolefin based resin component B while the sheath contains other resin components or a composite structure in which the sheath contains polyolefin based resin component B while the core contains other resin components. In the former case, the fibers of the second group at least serve to suppress the deformation fibers. In the latter case, the fibers of the second group at least serve to suppress the interfiber fusion.

When adopting a composite structure, it may be effective to combine polyolefin based resin component A and polyolefin based resin component B or adopt a three component composite structure combining a third component with polyolefin based resin component A and polyolefin based resin component B. A variety of composite forms may be adopted including core-in-sheath type, side-by-side type, eccentric core-in-sheath type, sea-island type, and other generally known types of composite structures. With respect to the cross-sectional shape, the fibers of the second group may have any appropriate shape such as round, triangular, Y-shaped, flattened, multilobar, and flattened.

For the mixed fiber nonwoven fabric according to the present invention, the ratio X/Y between the number of fibers of the first group, X, and the number of fibers of the second group, Y, is preferably 50 to 5,000, more preferably 60 to 1,000, and still more preferably 90 to 500. Here, the ratio in the number of fibers can be determined by observing two arbitrary cross sections of the mixed fiber nonwoven fabric that are perpendicular to the surface of the nonwoven fabric and perpendicular to each other and calculating the average of measured ratios in the number of fibers passing through the cross sections.

For the mixed fiber nonwoven fabric according to the present invention, an X/Y ratio in the aforementioned range allows the nonwoven fabric to have a large specific surface area while containing very thick fibers with a diameter of 15 $\mu$m or more. With this effect, the mixed fiber nonwoven fabric according to the present invention can ensure a high dust collection efficiency when used as filter.. The structural feature that the number of fibers of the first group is extremely larger than the number of fibers of the second group while the fiber diameter of the fibers of the second group is extremely larger than the number average fiber diameter of the fibers of the first group allows the fibers of the first group to occupy a large part of the surface of the mixed fiber nonwoven fabric. Accordingly, when the mixed fiber nonwoven fabric is subjected to electrification treatment, the nonwoven fabric as a whole can maintain good electrostatic propensities and high charge retention even if the fibers of the second group contain a component with a low charge retention. The ratio of the number of fibers of the first group to the number of fibers of the second group is smaller than specified above, it will be impossible to obtain an intended high dust collection efficiency and noticeable deterioration in performance will occur particularly when electrically charged.

In determining the fiber diameter, number average fiber diameter, and ratio in the number of fibers of the first group and the fibers of the second group contained in the mixed fiber nonwoven fabric according to the present invention, a variety of methods are available for distinguishing the two type of fibers. For example, a good technique is to remove only one type of fibers by making use of the difference in melting point or difference in resistance to chemicals between the two types of fibers and measure the diameter of the remaining fibers by using a microscope such as optical microscope, scanning electron microscope, and other various microscopes. Other useful methods include microscopic Raman spectroscopy, infrared microspectrometry, electron beam microanalyzer, and time-of-flight secondary ion mass spectrometry, which can analyze the matter distribution in various types of microscopic regions and can take measurements while distinguishing fiber components. For example, the difference in fiber diameter distribution between the fibers of the second group and the fibers of the first group in the mixed fiber nonwoven fabric according to the present invention can be determined by heat-treating the mixed fiber nonwoven fabric at a temperature between the melting points of the two components to melt the fibers of either group and compare the number average fiber diameter of the treated nonwoven fabric as a whole with the average fiber diameter of the untreated nonwoven fabric.

The mixed fiber nonwoven fabric according to the present invention preferably has a mass per unit area of 5 g/m$^2$ or more, more preferably 10 g/m$^2$ or more, and still more preferably 15 g/m$^2$ or more particularly when used as medium of air filters. If the mixed fiber nonwoven fabric is too small in mass per unit area, it will be so low in strength that deterioration in conveyance of the nonwoven fabric may occur during the production process. Furthermore, the mixed fiber nonwoven fabric according to the present invention preferably has a mass per unit area of 1,000 g/m$^2$ or less, more preferably 200 g/m$^2$ or less, and still more preferably 40 g/m$^2$ or less particularly when used as medium of air filters. If too large in mass per unit area, the mixed fiber nonwoven fabric may be disadvantageous in terms of production cost.

For the mixed fiber nonwoven fabric according to the present invention, the number of fibers of the second group per unit cross-sectional length and unit mass per unit area is preferably 0.1 (fibers·m$^2$/g·mm) or more, more preferably 0.2 (fibers·m$^2$/g·mm) or more, and still more preferably 0.3 (fibers·m$^2$/g·mm) or more. The number of fibers per unit cross-sectional length and unit mass per unit area is defined by the following equation. If the number of fibers of the second group per unit cross-sectional length and unit mass per unit area is too small, the fibers of the second group may fail to work effectively over the entire surface of the nonwoven fabric.

[Formula 3]
[number of fibers per unit cross-sectional length·unit mass per unit area (fibers·m²/g·mm)]

$$= \frac{[\text{number of strands passing through cross section of nonwoven fabric}]}{[\text{metsuke (g/m}^2)] \, [\text{observed cross-sectional length (mm)}]}$$

It is preferable for the mixed fiber nonwoven fabric according to the present invention to have a length-directional elongation percentage of less than 30%, more preferably less than 20%. A stretchy sheet with a length-directional elongation percentage larger than specified above will possibly be deteriorated as it is stretched by the process tension, leading to an increase in pressure loss when used as filter.

It is preferable for the mixed fiber nonwoven fabric according to the present invention to be electrified (electretized). In particular, an electretized nonwoven fabric sheet will be still smaller in pressure loss and higher in dust collection efficiency due to electrostatic attraction effect. For producing a high performance nonwoven fabric, a preferable electretizing method is to impart water to a nonwoven fabric and subsequently dry it. Methods to impart water to a mixed fiber nonwoven fabric include applying a water jet or a water droplet stream under a pressure large enough to allow water to penetrate into the interior of a nonwoven fabric, absorbing water from one side of a mixed fiber nonwoven fabric while wetting or after wetting to allow water to penetrate into the nonwoven fabric, and immersing a nonwoven fabric in a mixed solution of water and a water-soluble organic solvent such as isopropyl alcohol, ethyl alcohol, and acetone to allow water to penetrate into the interior of the nonwoven fabric.

The mixed fiber nonwoven fabric according to the present invention has a high dust collection efficiency and accordingly serves effectively as filter medium. The dust collection efficiency of an electrically charged fabric placed in an air flow with a flow rate of 4.5 m/min is preferably 90% or more, more preferably 99% or more, and still more preferably 99.9% or more, for polystyrene particles of 0.3 $\mu$m to 0.5 $\mu$m. In particular, a mixed fiber nonwoven fabric with a dust collection efficiency of 99.9% or more can serve effectively as medium for high precision air filters.

In general, the dust collection efficiency has a correlation with the mass per unit area. For the mixed fiber nonwoven fabric according to the present invention, the dust collection efficiency for a mass per unit area of 10 g/m² as calculated by the equation given below is preferably 50% or more, more preferably 75% or more, and still more preferably 90% or more. A fabric with a higher dust collection efficiency for a mass per unit area of 10 g/m² is advantageous in terms of cost because the required mass per unit area is smaller to achieve an intended dust collection efficiency.

[Formula 4]
[dust collection efficiency (%) per 10 (g/m²) of mass per unit area]

$$= 100 \times \left( 1 - 10^{\frac{10}{[\text{metsuke (g/m}^2)]} \log\left\{ 1 - \frac{[\text{dust collection efficiency (\%)}]}{100} \right\}} \right)$$

The mixed fiber nonwoven fabric according to the present invention has the feature of achieving a high dust collection efficiency with a small pressure loss. For the mixed fiber nonwoven fabric according to the present invention, the QF value defined by the equation given below is preferably 0.10 Pa⁻¹ or more, more preferably 0.15 Pa⁻¹ or more, and still more preferably 0.18 Pa⁻¹ or more. A large QF value allows a dust collection efficiency to be achieved at a small pressure loss.

[Formula 5]

$$[\text{QF value (Pa}^{-1})] = - \frac{\ln\left( 1 - \frac{[\text{dust collection efficiency (\%)}]}{100} \right)}{[\text{pressure loss (Pa)}]}$$

Furthermore, the mixed fiber nonwoven fabric according to the present invention may be combined with another sheet to produce a laminated fiber nonwoven fabric. For example, a nonwoven fabric sheet may be combined with a sheet having a higher rigidity to produce a high strength product or may be combined with a sheet with special functions such as deodorization and antimicrobial property. Available lamination methods include the bonding of two types of nonwoven fabric sheets with an adhesive and the formation of a nonwoven fabric sheet by a technique other than meltblowing followed by forming another sheet thereon by meltblowing. Other techniques for bonding two types of nonwoven fabric sheets include the spraying of a moisture curing urethane resin and the spraying of a thermoplastic resin and a thermal adhesive type fiber followed by passing them through a heating path.

However, the use of a bonding technique that causes a rise in pressure loss is not preferred because the mixed fiber nonwoven fabric according to the present invention is intended for use as a mixed fiber nonwoven fabric medium for filters. In this regard, the spraying of a moisture curing urethane resin is preferred because two nonwoven fabric sheets can be bonded without applying a pressures, making it possible to avoid an increase in pressure loss during the bond step.

The present invention serves to provide a mixed fiber nonwoven fabric with a small pressure loss and a high dust collection efficiency and the resulting mixed fiber nonwoven fabric can work effectively as filter medium particularly for air filters.

Thus, the mixed fiber nonwoven fabric according to the present invention can work effectively as filter medium. The filter medium is suitable for various general-use air filters and high performance ones such as filters for air conditioning, filters for air cleaning, and filters for automobile cabin filtering, although its application is not limited thereto.

[Examples]

Features and production methods of the mixed fiber nonwoven fabric according to the present invention are described in more detail below with reference to Examples. The characteristic values used in Examples were determined by the measuring methods described below.

(1) Mass per unit area of mixed fiber nonwoven fabric

For a mixed fiber nonwoven fabric sheet of longitudinal size $\times$ transverse size = 15 cm $\times$ 15 cm, weight measurements were taken at three points and each measurement was converted into weight per square meter, followed by calculating the average to determine the mass per unit area ($g/m^2$) of the nonwoven fabric.

(2) Number average fiber diameter

A total of 12 samples, each longitudinal size $\times$ transverse size = 3 mm $\times$ 3 mm, were taken from an appropriate part of a mixed fiber nonwoven fabric and each sample thus prepared was observed by scanning electron microscopy at an appropriately adjusted magnification to take a photograph of the fiber surface, thereby providing a total of 12 photographs. The magnification was in the range of 200 to 3,000 times. Fiber diameter measurements were taken for all fibers that had a clearly visible fiber diameter in each photograph. In regard to the accuracy of measurement, each measurement of the fiber diameter was rounded off to the significant place of 0.1 $\mu$m. The measurements thus taken were summed up and divided by the measured number of fibers to determine the number average fiber diameter. The number average fiber diameter was calculated to two significant digits for measurements of 1.0 $\mu$m or more and one significant digit for measurements of less than 1.0 $\mu$m.

(3) Number of fibers per millimeter of cross-sectional length in cross section of mixed fiber nonwoven fabric

A total of 12 pieces of mixed fiber nonwoven fabric, each longitudinal size $\times$ transverse size = 20 mm $\times$ 5 mm, were taken from an appropriate part of a mixed fiber nonwoven fabric and each piece was impregnated with epoxy resin, which was then solidified. Each piece of mixed fiber nonwoven fabric was cut with a single-edged razor blade to provide a specimen of longitudinal size $\times$ transverse size = 1 mm $\times$ 5 mm. The cross-sections of these specimens were photographed by scanning electron microscopy to provide 12 cross-sectional photographs of the mixed fiber nonwoven fabric. Photographs were taken at a magnification of 200 to 1,000 times and all fibers having a clearly visible fiber cross-sectional shape were included in the count.

(4) Proportion by volume of fibers

The proportion by volume of the fibers of polyolefin based resin component A and that of the fibers of polyolefin based resin component B were calculated by the following equations from the fiber diameters determined above. Here, their volumes were calculated on the assumption that all fibers of each fiber group had an identical length ($\alpha$).

- volume of each fiber: $\beta = \Pi$ (fiber diameter/2)$^2 \times \alpha$
- volume of the fibers of polyolefin based resin component A
  $\gamma(A)$ = sum of $\beta$'s of the fibers of polyolefin based resin component A

- volume of the fibers of polyolefin based resin component B y(B) = sum of β's of the fibers of polyolefin based resin component B
- proportion by volume (vol%) of the fibers of polyolefin based resin component A = γ(A) / [γ(A) + γ(B)]
- proportion by volume (vol%) of the fibers of polyolefin based resin component B = γ(B) / [γ(A) + γ(B)]

(5) QF value

The QF value, which is an indicator of the filtration performance, can be calculated by the following equation using the aforementioned dust collection efficiency and pressure loss. A smaller pressure loss and a higher dust collection efficiency give a larger QF value, indicating higher filtration performance.

[Formula 6]

$$[\text{QF value (Pa}^{-1})] = -\frac{\ln\left(1 - \frac{[\text{dust collection efficiency (\%)}]}{100}\right)}{[\text{pressure loss (Pa)}]}$$

(6) Dust collection efficiency and pressure loss

Samples for measurement, each longitudinal size $\times$ transverse size = 15 cm $\times$ 15 cm, were taken in the longitudinal direction of a mixed fiber nonwoven fabric and each sample was examined by a dust collection efficiency measuring apparatus as illustrated in Fig. 1. The dust collection efficiency measuring apparatus contains a sample holder 1 to hold a sample M, to which a dust storage box 2 is connected on the upstream side and a flow rate meter 3, a flow rate adjusting valve 4, and a blower 5 are connected on the downstream side. In addition, the sample holder 1 is equipped with a particle counter 6 via a switch cock 7 to measure both the number of dust particles on the upstream side and the number of dust particles on the downstream side of the measuring sample M. The sample holder 1 is also equipped with a pressure gage 8 to measure the difference in static pressure between the upstream side and the downstream side of the measuring sample M.

Before measuring the dust collection efficiency, a 10% solution of polystyrene 0.309U (manufactured by Nacalai Tesque, Inc.) was diluted 200 times with distilled water and the dust storage box 2 was filled with the solution. Then, the sample M was placed in the sample holder 1, followed by controlling the air feed rate by the flow rate adjusting valve 4 so as to adjust the filter passing speed to 4.5 m/min, stabilizing the dust concentration in the range of 10,000 to 40,000 per 2.83 $\times$ 10$^{-4}$ m$^3$ (0.01 ft$^3$), taking three measurements for each sample of the number of dust particles D on the upstream side and the number of dust particles d on the downstream side of the sample M using a particle counter 6 (KC-01B, manufactured by Rion Co., Ltd.), and calculating the dust collection efficiency (%) for particles of 0.3 $\mu$m to 0.5 $\mu$m by the following equation according to JIS K0901 (1991). Measurements were taken from five samples and their average was adopted finally as the dust collection efficiency of the fabric.

dust collection efficiency (%) = [1 - (d/D)] $\times$ 100

where

d: total number of dust particles in three measurements on downstream side
D: total number of dust particles in three measurements on upstream side

A nonwoven fabric with higher dust collection performance gives a smaller number of dust particles on the downstream side, showing a higher dust collection efficiency. The pressure loss was determined from difference in static pressure between the upstream side and the downstream side of the sample M read on the pressure gauge 8 during the measurement of the dust collection efficiency. Measurements were taken from five measuring samples and their average was adopted finally as the pressure loss in the fabric.

[Example 1]

Chimassorb (registered trademark) 944 (manufactured by BASF Japan Ltd.) was added in an amount of 1 mass% to polypropylene (PP) resin with a MFR of 860 g/10 min under a load 21.18 N at a temperature of 230°C to provide polyolefin based resin component A and WINTEC (registered trademark) WMG03 (propylene-ethylene random copolymer, MFR of 30 g/10 min at a temperature of 230°C, melting point 142°C) manufactured by Japan Polypropylene Corporation was used as polyolefin based resin component B to produce a nonwoven fabric by meltblowing using an apparatus having two extruders, two gear pumps, a meltblowing spinneret for mixed fiber spinning equipped with two types of discharge holes a's and b's (a-diameter 0.25 mm, b-diameter 0.6 mm, a-hole depth 2.5 mm, b-hole depth 3.5 mm, a-number of holes 95, b-number of holes 20, spinneret width 150 mm, a-a hole interval 1 mm, a-b hole interval 2 mm, five a-holes between b-holes aligned in a line), compression air generator, air heater, dust collection conveyor, and wind-up machine.

Resin pellets of polyolefin based resin component A described above and resin pellets of polyolefin based resin component B described above were supplied to the respective extruders, melted by heating at a temperature of 265°C, and fed forward through the gear pumps set to adjust the mass ratio (%) between polyolefin based resin component A and polyolefin based resin component B to 6:4, followed by introducing polyolefin based resin component A and polyolefin based resin component B to holes a's and holes b's, respectively, in the meltblowing spinneret for mixed fiber spinning, and discharging them at a single hole discharge rate of 0.15 g/min/hole and 0.48 g/min/hole, respectively, under the temperature conditions of a nozzle temperature of 265°C. The polymer discharged was made ultrafine by compressed air under a pressure of 0.10 MPa at a temperature of 285°C and blown against the dust collection conveyor located at a distance of 20 cm from the spinneret discharge holes. The speed of the dust collection conveyor was adjusted properly to provide a mixed fiber nonwoven fabric with a mass per unit area of 30 g/m$^2$.

The mixed fiber nonwoven fabric obtained in Example 1 was examined to determine the number average fiber diameter of the mixed fiber nonwoven fabric as a whole as shown in Table 1. Furthermore, the number of fibers per unit cross-sectional length over the entire mixed fiber nonwoven fabric was measured.

Then, the mixed fiber nonwoven fabric obtained in Example 1 was heat-treated at a temperature between the melting point of polyolefin based resin component A and the melting point of polyolefin based resin component B to melt the fibers of polyolefin based resin component B. The number average fiber diameter of this mixed fiber nonwoven fabric was measured and adopted as the number average fiber diameter of the fibers of the first group. Results are given in Table 1. The heat-treated mixed fiber nonwoven fabric was examined to determine the number of fibers of the first group per unit cross-sectional length. For different fiber diameter ranges, the difference between the overall number of fibers per unit cross-sectional length in the mixed fiber nonwoven fabric measured before the heat treatment and the number of fibers of the first group per unit cross-sectional length measured after the heat treatment was determined and adopted as the number of fibers of polyolefin based resin component B per unit cross-sectional length. In addition, the number of fibers per unit cross-sectional length was calculated for the fibers of polyolefin based resin component B of the second group in the fiber diameter range of 15 μm to 100 μm. These calculations are shown in Table 1 together with the proportion by volume of the fibers of polyolefin based resin component A and that of the fibers of polyolefin based resin component B.

Then, under the same conditions as in Example 1, the polymer discharged from the holes a's and the polymer discharged from the holes b's were sampled separately and the number average fiber diameter was measured for each sample. The results were used to calculate the ratio in apparent spinning speed between the fibers of polyolefin based resin component A and the fibers of polyolefin based resin component B. Results are given in Table 1.

Then, the mixed fiber nonwoven fabric obtained in Example 1 was examined to calculate the number of dust fiber bundles in a 10 cm × 10 cm area of the nonwoven fabric surface opposite to the one in contact with the dust collection conveyor. Five samples were examined and the results were averaged to give an adoptable value of the number of dust fiber bundles, which is shown in Table 1.

Then, the mixed fiber nonwoven fabric obtained in Example 1 was impregnated with an aqueous mixture solution of pure water and isopropyl alcohol mixed at a component weight ratio of 70:30, followed by natural drying and electrification treatment to provide an electretized meltblown mixed fiber nonwoven fabric. Characteristics of the electretized meltblown mixed fiber nonwoven fabric were measured and results are shown in Table 1.

[Example 2]

Except that the mass ratio (%) between polyolefin based resin component A and polyolefin based resin component B was set to 55:45, that the single hole discharge rate of holes b's was set to 0.60 g/min, and that the compression air pressure was set to 0.13 MPa, the same procedure as in Example 1 was carried out to produce a mixed fiber nonwoven fabric. Various characteristics of the nonwoven fabric obtained in Example 2 were measured by the same procedure as in Example 1 and results are shown in Table 1.

[Example 3]

Except that the spinneret used for mixed fiber spinning had two holes a's interposed between holes b's aligned in a line, that the mass ratio (%) between polyolefin based resin component A and polyolefin based resin component B was set to 33:67, that the single hole discharge rate of holes a's was set to 0.60 g/min/hole, and that the compression air pressure was set to 0.19 MPa, the same procedure as in Example 1 was carried out to produce a mixed fiber nonwoven fabric. Various characteristics of the mixed fiber nonwoven fabric obtained in Example 3 were measured by the same procedure as in Example 1 and results are shown in Table 1.

[Example 4]

Except that Prime Polypro (registered trademark) J229E (propylene-ethylene random copolymer, MFR 50 g/10 min at a temperature of 230°C, melting point 155°C) manufactured by Prime Polymer Co., Ltd. was used as polyolefin based resin component B, that the mass ratio (%) between polyolefin based resin component A and resin component B was set to 54:46, that the single hole discharge rate of holes a's was set to 0.15 g/min, that the single hole discharge rate of holes b's was set to 0.60 g/min, and that the compression air pressure was set to 0.13 MPa, the same procedure as in Example 3 was carried out to produce a nonwoven fabric. Various characteristics of the mixed fiber nonwoven fabric obtained in Example 4 were measured by the same procedure as in Example 1 and results are shown in Table 1.

[Example 5]

Except that the mass ratio (%) between polyolefin based resin component A and polyolefin based resin component B was set to 61:39, that the single hole discharge rate of holes a's was set to 0.47 g/min/hole, that the single hole discharge rate of holes b's was set to 0.60 g/min, and that the compression air pressure was set to 0.07 MPa, the same procedure as in Example 3 was carried out to produce a mixed fiber nonwoven fabric. Various characteristics of the nonwoven fabric obtained in Example 5 were measured by the same procedure as in Example 1 and results are shown in Table 1.

[Table 1]

| [Table 1] | | | Example | | | | |
|---|---|---|---|---|---|---|---|
| | | | 1 | 2 | 3 | 4 | 5 |
| Combination of materials | component A | polymer type | homo PP | homo PP | homo PP | homo PP | homo PP |
| | | melting point (°C) | 163 | 163 | 163 | 163 | 163 |
| | | MFR( g/10 min) | 860 | 860 | 860 | 860 | 860 |
| | | solid density (g/cm$^3$) | 0.9 | 0.9 | 0.9 | 0.9 | 0.9 |
| | component B | Polymer type | WINTEC WMG03 | WINTEC WMG03 | WINTEC WMG03 | Prime Polypro J229E | WINTEC WMG03 |
| | | melting point (°C) | 142 | 142 | 142 | 155 | 142 |
| | | MFR(g/10 min) | 30 | 30 | 30 | 50 | 30 |
| | | solid density (g/cm$^3$) | 0.9 | 0.9 | 0.9 | 0.9 | 0.9 |
| | difference in melting point (°C) | | 21 | 21 | 21 | 8 | 21 |
| Spinneret | hole a | diameter (diameter mm) | 0.25 | 0.25 | 0.25 | 0.25 | 0.25 |
| | | hole depth (mm) | 2.5 | 2.5 | 2.5 | 2.5 | 2.5 |

(continued)

| [Table 1] | | | Example | | | | |
|---|---|---|---|---|---|---|---|
| | | | 1 | 2 | 3 | 4 | 5 |
| | | number of holes | 95 | 95 | 60 | 95 | 60 |
| | hole b | diameter (diameter mm) | 0.6 | 0.6 | 0.6 | 0.6 | 0.6 |
| | | hole depth (mm) | 3.5 | 3.5 | 3.5 | 3.5 | 3.5 |
| | | number of holes | 20 | 20 | 31 | 20 | 31 |
| Production conditions | single hole discharge rate A (g/min/hole) | | 0.15 | 0.15 | 0.15 | 0.15 | 0.47 |
| | single hole discharge rate B (g/min/hole) | | 0.48 | 0.60 | 0.60 | 0.60 | 0.60 |
| | fiber volume ratio between two resin components (component A: component B) | | 58:42 | 56:44 | 30:70 | 57:43 | 65:35 |
| | mass per unit area (g/m$^2$) | | 30 | 30 | 30 | 30 | 30 |
| Fiber diameter | number average fiber diameter of first fiber group ($\mu$m) | | 1.6 | 1.4 | 1.5 | 1.6 | 4.6 |
| | number average fiber diameter of nonwoven fabric as a whole ($\mu$m) | | 1.7 | 1.7 | 1.7 | 1.8 | 4.9 |
| Number of fibers | number of fibers of first fiber group ($\times 10^3$/cross section mm) | | 3.1 | 3.0 | 2.4 | 2.9 | 0.3 |
| | number of fibers of second fiber group (/cross section mm) | 15 $\mu$m or more and less than 20 $\mu$m | 15.1 | 9.4 | 8.1 | 12.3 | 5.0 |
| | | 20 $\mu$m or more and less than 25 $\mu$m | 7.2 | 8.4 | 2.6 | 5.9 | 2.4 |
| | | 25 $\mu$m or more and less than 30 $\mu$m | 7.8 | 4.0 | 1.7 | 4.2 | 2.1 |
| | | 30 $\mu$m or more and less than 100 $\mu$m | 1.8 | 2.2 | 3.2 | 0.4 | 3.6 |
| Spinning speed | spinning speed ratio (component A/component B) | | 30 | 48 | 31 | 39 | 17 |
| Number of dust fiber bundles | average number of dust fiber bundles (/10cm$\times$10cm) | | 0.2 | 0.2 | 1.6 | 1.0 | 0.0 |

(continued)

| [Table 1] | | | Example | | | | |
|---|---|---|---|---|---|---|---|
| | | | 1 | 2 | 3 | 4 | 5 |
| Dust collection performance | dust collection efficiency (%) | | 99.98 | 99.97 | 99.97 | 99.99 | 90.98 |
| | pressure loss (Pa) | | 38.4 | 36.6 | 31.4 | 56.1 | 8.9 |
| | QF value (Pa$^{-1}$) | | 0.22 | 0.22 | 0.26 | 0.17 | 0.27 |

[Comparative example 1]

Except that Chimassorb (registered trademark) 944 (manufactured by BASF Japan Ltd.) was added in an amount of 1 mass% to polypropylene resin (melting point 163°C) with a MFR of 60 g/10 min under a load of 21.18 N at a temperature of 230°C to provide polyolefin based resin component B, that the mass ratio (%) between polyolefin based resin component A and resin component B was set to 43:57, that the single hole discharge rate of holes b's was set to 0.90 g/min/hole, that the extruder temperature was set to 280°C, that the nozzle temperature was set to 280°C, that the compression air pressure was set to 0.05 MPa, and that the compression air temperature was set to 300°C, the same procedure as in Example 1 was carried out to produce a mixed fiber nonwoven fabric.
The cross section of the nonwoven fabric obtained in Comparative example 1 was observed by scanning electron microscopy with results showing that the discharged fibers of the group from hole a's had a fiber diameter of less than 10 μm and that the discharged fibers of the group from hole b's had a fiber diameter of 10 μm or more, confirming that they had clearly different fiber diameter distributions. Based on these results, the number average fiber diameter and the number of fibers were determined for fibers with a fiber diameter of less than 10 μm and those with a fiber diameter of 10 μm or more. Furthermore, the mixed fiber nonwoven fabric obtained in Comparative example 1 was subjected to electretizing treatment by the same procedure as in Example 1 and then, its characteristics were examined. Results are shown in Table 2.

[Comparative example 2]

Except that the meltblowing spinneret used for mixed fiber spinning had holes b's with a diameter of 0.4 mm, that Chimassorb (registered trademark) 944 (manufactured by BASF Japan Ltd.) was added in an amount of 1 mass% to polypropylene resin (melting point 163°C) with a MFR of 860 g/10 min under a load of 21.18 N at a temperature of 230°C to provide polyolefin based resin component B, that the mass ratio (%) between polyolefin based resin component A and polyolefin basedresin component B was set to 40:60, that the single hole discharge rate of holes a's was set to 0.19 g/min/hole, that the single hole discharge rate of holes b's was set to 1.39 g/min/hole, that the extruder temperature was set to 265°C, that the nozzle temperature was set to 255°C, that the compression air pressure was set to 0.15 MPa, and that the compression air temperature was set to 265°C, the same procedure as in Example 1 was carried out to produce a mixed fiber nonwoven fabric.
The cross section of the nonwoven fabric obtained in Comparative example 2 was observed by scanning electron microscopy. The discharged fibers of the group from hole a's and the discharged fibers of the group from hole b's did not differ significantly in fiber diameter and they were indistinguishable in the photograph. Thus, it was impossible to determine the number average fiber diameters of the two types of fibers separately. In addition, fibers with a fiber diameter of more than 15 μm were not found.
The mixed fiber nonwoven fabric obtained in Comparative example 2 was subjected to electretizing treatment by the same procedure as in Example 1 and then, its characteristics were examined. Results are shown in Table 2.

[Comparative example 3]

Except that the meltblowing spinneret used for mixed fiber spinning had holes b's with a diameter of 0.4 mm, that Notio (registered trademark) PN-20300 (polyolefin-copolymerized elastomer, MFR 30 g/10 min at a temperature of 230°C, melting point 160°C) manufactured by Mitsui Chemicals, Inc. was used as polyolefin based resin component B, that the mass ratio (%) between polyolefin based resin component A and component B was set to 75:25, that the single hole discharge rate of holes a's was set to 0.19 g/min, that the single hole discharge rate of holes b's was set to 0.31 g/min/hole, the same procedure as in Example 1 was carried out to produce a mixed fiber nonwoven fabric. Various characteristics of the mixed fiber nonwoven fabric obtained in Comparative example 3 were measured by the same procedure as in Example 1 and results are shown in Table 2.

[Comparative example 4]

Except that the meltblowing spinneret used for mixed fiber spinning had holes b's with a diameter of 0.4 mm, that the mass ratio (%) between polyolefin based resin component A and polyolefin based resin component B was set to 75:25, that the single hole discharge rate of holes a's was set to 0.19 g/min, that the single hole discharge rate of holes b's was set to 0.31 g/min/hole, the same procedure as in Example 1 was carried out to produce a mixed fiber nonwoven fabric. Various characteristics of the mixed fiber nonwoven fabric obtained in Comparative example 4 were measured by the same procedure as in Example 1 and results are shown in Table 2.

[Table 2]

| [Table 2] | | | Comparative example | | | |
|---|---|---|---|---|---|---|
| | | | 1 | 2 | 3 | 4 |
| Combination of materials | component A | polymer type | homo PP | homo PP | homo PP | homo PP |
| | | melting point (°C) | 163 | 163 | 163 | 163 |
| | | MFR(g/10 min) | 860 | 860 | 860 | 860 |
| | | solid density (g/cm$^3$) | 0.9 | 0.9 | 0.9 | 0.9 |
| | component B | polymer type | homo PP | homo PP | Notio PN-20300 | WINTEC WMG03 |
| | | melting point (°C) | 163 | 163 | 160 | 142 |
| | | MFR(g/10 min) | 60 | 860 | 30 | 30 |
| | | solid density (g/cm$^3$) | 0.9 | 0.9 | 0.9 | 0.9 |
| | difference in melting point (°C) | | 0 | 0 | 3 | 21 |
| Spinneret | hole a | diameter (diameter mm) | 0.25 | 0.25 | 0.25 | 0.25 |
| | | hole epth (mm) | 2.5 | 2.5 | 2.5 | 2.5 |
| | | number of holes | 95 | 95 | 95 | 95 |
| | hole b | diameter (diameter mm) | 0.6 | 0.4 | 0.4 | 0.4 |
| | | hole depth (mm) | 3.5 | 3.5 | 3.5 | 3.5 |
| | | number of holes | 20 | 20 | 20 | 20 |
| Production conditions | single hole discharge rate A (g/min/hole) | | 0.15 | 0.19 | 0.19 | 0.19 |
| | single hole discharge rate B (g/min/hole) | | 0.90 | 1.39 | 0.31 | 0.31 |
| | fiber volume ratio between two resin components (component A:component B) | | 39:61 | calculation impossible | 73:27 | 74:26 |
| | mass per unit area (g/m$^2$) | | 30 | 30 | 30 | 30 |
| Fiber diameter | number average fiber diameter of first fiber group ($\mu$m) | | 1.3 | indistinguishable | 1.8 | 1.8 |

(continued)

| [Table 2] | | | Comparative example | | | |
|---|---|---|---|---|---|---|
| | | | 1 | 2 | 3 | 4 |
| | number average fiber diameter of nonwoven fabric as a whole ($\mu$m) | | 1.4 | 2.2 | 1.9 | 1.9 |
| Number of fibers | number of fibers of first fiber group ($\times 10^3$/ cross section mm) | | 2.2 | indistinguishable | 2.7 | 2.8 |
| | number of fibers of second fiber group (/ cross section mm) | 15 $\mu$m or more and less than 20 $\mu$m | 3.0 | 0.0 | 2.8 | 2.5 |
| | | 20 $\mu$m or more and less than 25 $\mu$m | 1.0 | 0.0 | 0.0 | 1.6 |
| | | 25 $\mu$m or more and less than 30 $\mu$m | 10.2 | 0.0 | 0.0 | 0.8 |
| | | 30 $\mu$m or more and less than 100 $\mu$m | 0.0 | 0.0 | 0.0 | 1.6 |
| Spinning speed | spinning speed ratio (component A/ component B) | | 77 | calculation impossible | 17 | 17 |
| Number of dust fiber bundles | average number of dust fiber bundles (/ 10cm$\times$10cm) | | 8.6 | 0.2 | 0.0 | 0.4 |
| Dust collection performance | dust collection efficiency (%) | | 99.93 | 99.03 | 99.89 | 99.94 |
| | pressure loss (Pa) | | 47 | 38.0 | 87.1 | 75.9 |
| | QF value (Pa$^{-1}$) | | 0.15 | 0.12 | 0.08 | 0.10 |

As clearly seen from Table 1, the mixed fiber nonwoven fabric that was produced using mixed fiber meltblowing spinner equipment in Example 1 where two material types, a discharge rate, compression air pressure, nozzle temperature, etc., were selected appropriately contained fibers of the first group formed of polypropylene based resin and having a number average fiber diameter of 1.6 $\mu$m. In this mixed fiber nonwoven fabric, furthermore, the fibers of polypropylene based resin component B contained, at a rate of 7.0 fibers or more per millimeter of cross-sectional length in the mixed fiber nonwoven fabric, fibers of the second group in the form of fibers of polyolefin based resin that had a melting point lower by 21°C than that of the polypropylene based resin and had a monofilament diameter of 15 to 100 $\mu$m, with the monofilament diameter being not less than five times the number average fiber diameter of the polypropylene fibers. After being subjected to electrification treatment, this mixed fiber nonwoven fabric showed a high dust collection efficiency of more than 99.97% in spite of a small pressure loss.

In Example 3, furthermore, a high dust collection efficiency was also achieved in spite of a small pressure loss even after changing the structure of the spinneret and proportions of the polymers. In Example 4, a high dust collection efficiency was also achieved in spite of a small pressure loss even after changing the polymer type used. These mixed fiber nonwoven fabrics with a high QF value can serve effectively as medium for HEPA filters. In Example 5, furthermore, a mixed fiber nonwoven fabric very high in QF value, which is an indicator of filter performance, was obtained after changing the structure of the spinneret and conditions such as proportions of the polymers.

It is clearly seen from Table 2, on the other hand, that in the nonwoven fabric given in Comparative example 1, the fibers having a diameter that was 15 to 100 $\mu$m and larger by five times or more than the number average fiber diameter of polypropylene fibers contained no components with a melting point lower by 5°C to 40°C than that of the polypropylene. Accordingly, the number of dust fiber bundles was large and the dust collection efficiency was low compared with the mixed fiber nonwoven fabric described in Example 2, which contained fibers with diameters close to each other.

The mixed fiber nonwoven fabric described in Comparative example 2 was free of fibers with a fiber diameter of 15 $\mu$m or more and 100 $\mu$m or less and also free of resin components with a melting point lower by 5°C to 40°C than that of polypropylene. Consequently, it was impossible to achieve a sufficiently high dust collection efficiency.

The mixed fiber nonwoven fabric described in Comparative example 3 failed to contain a predetermined amount of fibers with a fiber diameter of 15 $\mu$m or more and 100 $\mu$m or less. It was also free of resin components with a melting point lower by 5°C to 40°C than that of polypropylene. Consequently, it was impossible to achieve a sufficiently high dust collection efficiency, and a large pressure loss was shown.

The mixed fiber nonwoven fabric described in Comparative example 4 failed to contain a predetermined amount of fibers with a fiber diameter of 15 $\mu$m or more and 100 $\mu$m or less. Consequently, it was impossible to achieve a sufficiently high dust collection efficiency, and a large pressure loss was shown.

Thus, a mixed fiber nonwoven fabric containing two different types of fibers with different fiber diameter distributions can have a high dust collection efficiency in addition to a small pressure loss when they largely differ in fiber diameter and account for specific proportions.

[Explanation of numerals]

1: sample holder
2: dust storage box
3: flow rate meter
4: flow rate adjusting valve
5: blower
6: particle counter
7: switch cock
8: pressure gage
M: sample

**Claims**

1. A mixed fiber nonwoven fabric comprising at least two fiber groups, namely, one containing fibers of polyolefin based resin component A and the other containing fibers of polyolefin based resin component B, the fiber group containing fibers of polyolefin based resin component A being referred to as first fiber group, the first fiber group having a number average fiber diameter of 0.3$\mu$m to 7.0 $\mu$m, part of the fibers of polyolefin based resin component B, each having a fiber diameter in the range of 15$\mu$m to 100 $\mu$m and not less than 5 times the number average fiber diameter of the first fiber group being referred to as fibers of second fiber group, the fibers of the second fiber group maintaining a form of fibers and existing in the cross section of the mixed fiber nonwoven fabric at a rate of 7.0 fibers or more per millimeter of the cross-sectional length, the melting point of polyolefin based resin component B being lower by 5°C to 40°C than that of polyolefin based resin component A, the melt flow rate of polyolefin based resin component A being 5 to 100 times the melt flow rate of polyolefin based resin component B and the number average fiber diameter of the mixed fiber nonwoven fabric as a whole being 0.3$\mu$m to 10 $\mu$m.

2. A mixed fiber nonwoven fabric as described in claim 1, wherein the ratio X/Y where X is the number of fibers of the first fiber group while Y is the number of fibers of the second fiber group is in the range of 50 to 5,000.

3. A mixed fiber nonwoven fabric as described in either claim 1 or 2 that is produced by the mixed fiber meltblowing technique.

4. A mixed fiber nonwoven fabric as described in any one of claims 1 to 3, wherein polyolefin based resin component A is a polypropylene homopolymer.

5. A mixed fiber nonwoven fabric as described in any one of claims 1 to 4, wherein polyolefin based resin component B is a propylene-ethylene copolymer.

6. A mixed fiber nonwoven fabric as described in any one of claims 1 to 5, wherein the volume ratio of A:B between the fibers of polyolefin based resin component A and the fibers of polyolefin based resin component B is in the range of 20:80 to 90:10.

7. A mixed fiber nonwoven fabric as described in any one of claims 1 to 6 that is electrified.

8. A laminated sheet comprising at least one layer containing a mixed fiber nonwoven fabric as described in any one of claims 1 to 7.

9. A filter comprising either a mixed fiber nonwoven fabric as described in any one of claims 1 to 7 or a laminated sheet as described in claim 8.

10. A method for producing a mixed fiber nonwoven fabric according to claim 1 comprising a step for discharging two different components, namely, polyolefin based resin component A and polyolefin based resin component B, from separate discharge holes provided in a die, the melting point of polyolefin based resin component A being higher by 5°C to 40°C than the melting point of the polyolefin based resin component B, the melt flow rate of polyolefin based resin component A being 5 to 100 times the melt flow rate of polyolefin based resin component B, and the apparent spinning speed of the fibers of polyolefin based resin component A is 20 to 500 times the apparent spinning speed of the fibers of polyolefin based resin component B.

**Patentansprüche**

1. Mischfaser-Vliesstoff, der zumindest zwei Fasergruppen umfasst, nämlich eine, die Fasern eine Polyolefin-basierten Harzkomponente A enthält, und eine, die Fasern einer Polyolefin-basierten Harzkomponente B enthält, wobei die Fasergruppe, die Fasern einer Polyolefin-basierten Harzkomponente A enthält, als erste Fasergruppe bezeichnet wird, wobei die erste Fasergruppe einen zahlenmittleren Faserdurchmesser von 0,3 $\mu$m bis 7,0 $\mu$m aufweist, wobei jener Teil der Fasern der Polyolefin-basierten Harzkomponente B, die jeweils einen Faserdurchmesser im Bereich von 15 $\mu$m bis 100 $\mu$m und nicht weniger als das 5-Fache des zahlenmittleren Faserdurchmessers der ersten Fasergruppe aufweist, als Fasern der zweiten Fasergruppe bezeichnet wird, wobei die Fasern der zweiten Fasergruppe die Form von Fasern beibehalten und in dem Querschnitt des Mischfaser-Vliesstoffs in einer Menge von 7,0 Fasern oder mehr pro Millimeter der Querschnittslänge vorliegen, wobei der Schmelzpunkt der Polyolefin-basierten Harzkomponente B um 5 °C bis 40 °C niedriger ist als jener der Polyolefin-basierten Harzkomponente A, wobei die Schmelzflussrate der Polyolefin-basierten Harzkomponente A das 5- bis 100-Fache der Schmelzflussrate der Polyolefin-basierten Harzkomponente B beträgt und der zahlenmittlere Faserdurchmesser des Mischfaser-Vliesstoffs insgesamt 0,3 $\mu$m bis 10 $\mu$m beträgt.

2. Mischfaser-Vliesstoff wie in Anspruch 1 beschrieben, wobei das Verhältnis X/Y im Bereich von 50 bis 5000 liegt, wobei X die Anzahl der Fasern der ersten Fasergruppe ist, während Y die Anzahl der Fasern der zweiten Fasergruppe ist.

3. Mischfaser-Vliesstoff wie entweder in Anspruch 1 oder 2 beschrieben, der durch ein Mischfaser-Schmelzblasverfahren hergestellt ist.

4. Mischfaser-Vliesstoff wie in einem der Ansprüche 1 bis 3 beschrieben, wobei die Polyolefin-basierte Harzkomponente A ein Polypropylen-Homopolymer ist.

5. Mischfaser-Vliesstoff wie in einem der Ansprüche 1 bis 4 beschrieben, wobei die Polyolefin-basierte Harzkomponente B ein Propylen-Ethylen-Copolymer ist.

6. Mischfaser-Vliesstoff wie in einem der Ansprüche 1 bis 5 beschrieben, wobei das Volumenverhältnis von A:B der Fasern der Polyolefin-basierten Harzkomponente A zu den Fasern der Polyolefin-basierten Harzkomponente B im Bereich von 20:80 bis 90:10 liegt.

7. Mischfaser-Vliesstoff wie in einem der Ansprüche 1 bis 6 beschrieben, der elektrisch geladen ist.

8. Laminatfolie, die zumindest eine Schicht umfasst, die einen Mischfaser-Vliesstoff wie in einem der Ansprüche 1 bis 7 beschrieben enthält.

9. Filter, das entweder einen Mischfaser-Vliesstoff wie in einem der Ansprüche 1 bis 7 beschrieben oder eine Laminatfolie wie in Anspruch 8 beschrieben umfasst.

**10.** Verfahren zur Herstellung eines Mischfaser-Vliesstoffs nach Anspruch 1, umfassend einen Schritt der Ausgabe zweier unterschiedlicher Komponenten, nämlich der Polyolefin-basierten Harzkomponente A und der Polyolefin-basierten Harzkomponente B aus separaten Ausgabeöffnungen, die in einer Düse bereitgestellt sind, wobei der Schmelzpunkt der Polyolefin-basierten Harzkomponente A um 5 °C bis 40 °C höher ist als der Schmelzpunkt der Polyolefin-basierten Harzkomponente B, wobei die Schmelzflussrate der Polyolefin-basierten Harzkomponente A das 5- bis 100-Fache der Schmelzflussrate der Polyolefin-basierten Harzkomponente B beträgt und die scheinbare Spinngeschwindigkeit der Fasern der Polyolefin-basierten Harzkomponente A das 20- bis 500-Fache der scheinbaren Spinngeschwindigkeit der Polyolefin-basierten Harzkomponente B beträgt.

**Revendications**

1. Tissu non tissé à fibres mélangées comprenant au moins deux groupes de fibres, à savoir, un premier contenant des fibres de composant de résine à base de polyoléfine A et l'autre contenant des fibres de composant de résine à base de polyoléfine B, le premier groupe contenant des fibres du composant de résine à base de polyoléfine A étant indiqué en tant que premier groupe de fibres, le premier groupe de fibres ayant un diamètre de fibre moyen en nombre de 0,3 $\mu$m à 7,0 $\mu$m, une partie des fibres du composant de résine à base de polyoléfine B, chacune ayant un diamètre de fibre compris entre 15 $\mu$m et 100 $\mu$m et pas inférieur à 5 fois le diamètre moyen en nombre du premier groupe de fibres étant indiqué en tant que second groupe de fibres, les fibres du second groupe de fibres conservant une forme de fibres et existant dans la section transversale du tissu non tissé à fibres mélangées à raison de 7,0 fibres ou plus par millimètre de la longueur de section transversale, le point de fusion du composant de résine à base de polyoléfine B étant inférieur de 5 à 40°C à celui du composant de résine à base de polyoléfine A, l'indice de fluidité à chaud du composant de résine à base de polyoléfine A étant de 5 à 100 fois l'indice de fluidité à chaud du composant de résine à base de polyoléfine B, et
le diamètre moyen en nombre du tissu non tissé à fibres mélangées dans son ensemble étant compris entre 0,3 $\mu$m et 10 $\mu$m.

2. Tissu non tissé à fibres mélangées selon la revendication 1, dans lequel le rapport X/Y, où X est le nombre des fibres du premier groupe de fibres alors que Y est le nombre de fibres du second groupe de fibres, est dans la plage de 50 à 5000.

3. Tissu non tissé à fibres mélangées selon la revendication 1 ou 2, qui est produit par la technique de fusion-soufflage de fibres mélangées.

4. Tissu non tissé à fibres mélangées selon l'une quelconque des revendications 1 à 3, dans lequel le composant de résine à base de polyoléfine A est un homopolymère de polypropylène.

5. Tissu non tissé à fibres mélangées selon l'une quelconque des revendications 1 à 4, dans lequel le composant de résine à base de polyoléfine B est un copolymère de propylène-éthylène.

6. Tissu non tissé à fibres mélangées selon l'une quelconque des revendications 1 à 5, dans lequel le rapport volumique A:B entre les fibres du composant de résine à base de polyoléfine A et les fibres du composant de résine à base de polyoléfine B est dans la plage de 20:80 à 90:10.

7. Tissu non tissé à fibres mélangées selon l'une quelconque des revendications 1 à 6, qui est électrifié.

8. Feuille stratifiée comprenant au moins une couche contenant un tissu non tissé à fibres mélangées tel que décrit dans l'une quelconque des revendications 1 à 7.

9. Filtre comprenant soit un tissu non tissé à fibres mélangées tel que décrit dans l'une quelconque des revendications 1 à 7, soit une feuille stratifiée telle que décrite dans la revendication 8.

10. Procédé de production d'un tissu non tissé à fibres mélangées selon la revendication 1, comprenant une étape pour décharger deux composants différents, à savoir un composant de résine à base de polyoléfine A et un composant de résine à base de polyoléfine B, à partir de trous de décharge séparés prévus dans une filière, le point de fusion du composant de résine à base de polyoléfine A étant supérieur de 5 à 40°C au point de fusion du composant de résine à base de polyoléfine B, l'indice de fluidité à chaud du composant de résine à base de polyoléfine A étant 5 à 100 fois celui du composant de résine à base de polyoléfine B, et la vitesse de filature apparente des fibres du composant de résine à base de polyoléfine A est de 20 à 500 fois la vitesse de filature apparente des fibres du composant de résine à base de polyoléfine B.

【Fig. 1】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002201560 A
- JP 63280408 A
- JP 9501604 A
- JP 2002249978 A
- JP 2104765 A
- JP 2010511488 A
- JP 2009545682 A
- US 5783011 A
- JP 11131353 A

- JP 7082649 A
- JP 2006112025 A
- JP 2005171456 A
- JP 6093551 A
- US 2004016345 A1
- US 3981650 A
- JP 8013309 A
- JP 2011168903 A